# EUROPÄISCHE PATENTANMELDUNG

(11) **EP 2 757 073 A1**
(43) Veröffentlichungstag der Anmeldung: **23.07.2014**
(21) Anmeldenummer: 14000081.1
(22) Anmeldetag: 10.01.2014
(51) Int. Cl.: C02F 1/28, C02F 1/72, C02F 1/76, E04H 4/12

(54) **Verfahren und Vorrichtung zur Aufbereitung von Badewasser**

(30) Priorität: 17.01.2013 DE 102013000712
(71) Anmelder: Beyer, Arnim, 14513 Teltow (DE)
(72) Erfinder: Beyer, Arnim, 14513 Teltow (DE)
(74) Vertreter: Munk, Ludwig

(57) **Zusammenfassung**

Die Erfindung betrifft ein Verfahren zur Aufbereitung von einem Becken (1) zugeordnetem Badewasser, das in einer Umwälzstrecke (5) umgewälzt wird, sowie eine Vorrichtung zur Durchführung des Verfahrens. Das Badewasser durchläuft in der Umwälzstrecke (5) eine Filtereinrichtung (8) und wird stromabwärts der Filtereinrichtung (8) vor dem Verlassen der Umwälzstrecke (5) gechlort. Erfindungsgemäß wird dem in der Umwälzstrecke (5) umgewälzten Badewasser Wasserstoffperoxid (H₂O₂) beigemischt, bevor es gechlort wird, welches vor der Chlorung nicht vorrichtungsmäßig deaktiviert wird.

## Beschreibung

Die Erfindung betrifft ein Verfahren zur Aufbereitung von einem Becken zugeordnetem Badewasser, das in einer Umwälzstrecke umgewälzt wird. Das Badewasser durchläuft in der Umwälzstrecke eine Filtereinrichtung und wird stromabwärts der Filtereinrichtung vor dem Verlassen der Umwälzstrecke gechlort.

Des weiteren betrifft die Erfindung eine Vorrichtung zur Durchführung des erfindungsgemäßen Verfahrens mit einer einem Becken für Badewasser zugeordneten, mit einer Umwälzpumpe versehenen Umwälzstrecke, die eine Wasseraufbereitungseinrichtung und eine dieser nachgeordnete Chlorungseinrichtung enthält.

Gattungsgemäße Verfahren und Vorrichtungen werden verwendet, um Badewasser in einem Becken, beispielsweise einem Schwimmbecken zur öffentlichen oder privaten Nutzung, zu reinigen, zu desinfizieren und/oder von unerwünschten Stoffen und Substanzen zu befreien. Im Fall von öffentlichen Schwimmbädern hat sich die Wasseraufbereitung beispielsweise an der DIN 19643 zu orientieren, welche Mindeststandards hinsichtlich der Konstruktion und Auslegung einer Anlage für die Schwimmbadreinigung festlegt.

Ein gattungsgemäßes Verfahren und eine gattungsgemäße Vorrichtung können beispielsweise dem Dokument DE 10 2011 012 137 A1 entnommen werden. Dabei wird zusätzlich zu der bereits beschriebenen Chlorung des Badewassers vor der Chlorung innerhalb der Umwälzstrecke Wasserstoffperoxid (H₂O₂) zugesetzt, welches vor der Chlorung des Badewassers mittels UV-Bestrahlung wieder deaktiviert wird. Bei der Deaktivierung zerfällt Wasserstoffperoxid und entfaltet dabei seine reinigende Wirkung, mittels welcher beispielsweise unerwünschte Mikroorganismen, Viren oder unerwünschte Substanzen wie adsorbierbare, organisch gebundene Halogenide (AOX), THM, gebundenes Chlor aus dem Wasser entfernt werden.

Allerdings erfordert die gezielte Deaktivierung von Wasserstoffperoxid mittels UV-Bestrahlung einen hohen apparativen Aufwand sowie laufende Energiezufuhr für eine UV-Lampe. Dies verursacht erhebliche Investitionskosten und Betriebskosten.

Es ist deshalb eine Aufgabe der Erfindung, ein Verfahren und eine Vorrichtung zur Aufbereitung von Badewasser vorzusehen, welches mit einem geringeren apparativen Aufwand und/oder mit geringerer Energiezufuhr auskommt.

Dies wird erfindungsgemäß durch ein Verfahren gemäß Anspruch 1 sowie eine Vorrichtung gemäß Anspruch 8 erreicht. Vorteilhafte Ausgestaltungen können beispielsweise den jeweiligen Unteransprüchen entnommen werden.

Die Erfindung betrifft ein Verfahren zur Aufbereitung von einem Becken zugeordnetem Badewasser, das in einer Umwälzstrecke umgewälzt wird. Das Badewasser durchläuft in der Umwälzstrecke eine Filtereinrichtung und wird stromabwärts der Filtereinrichtung vor dem Verlassen der Umwälzstrecke gechlort. Erfindungsgemäß wird dem in der Umwälzstrecke umgewälzten Badewasser Wasserstoffperoxid (H₂O₂) beigemischt, bevor es gechlort wird. Das Wasserstoffperoxid wird vor der Chlorung nicht vorrichtungsmäßig deaktiviert.

Das erfindungsgemäße Verfahren basiert auf der Erkenntnis, dass das zugesetzte Wasserstoffperoxid auch ohne aktive, d.h. vorrichtungsmäßige Deaktivierung mittels UV-Licht ausreichend schnell zerfällt und dabei seine oxidierende Wirkung entfaltet. Dies kann zum Einen durch spontanen Zerfall des Wasserstoffperoxids an Komponenten wie beispielsweise der Filtereinrichtung, welche den Zerfall beschleunigen können, erfolgen. Außerdem kann der Zerfall von Wasserstoffperoxid beim Kontakt mit dem stromabwärts zugesetzten Chlor beschleunigt erfolgen. Aufgrund dieser Erkenntnis, welche der Erfinder der vorliegenden Anmeldung gewonnen hat, ist es möglich, erfindungsgemäß auf eine Deaktivierung von Wasserstoffperoxid mittels UV-Licht zu verzichten und damit sowohl den apparativen Aufwand wie auch den Energieverbrauch deutlich zu verringern.

Bei der Umwälzstrecke kann es sich um eine Wasseraufbereitungsanlage eines Beckens, beispielsweise eines Schwimmbeckens, handeln. Eine solche Umwälzstrecke kann beispielsweise an einer Rohwasserkammer beginnen, in welche das zu reinigende Wasser aus dem Becken läuft. Hierfür kann beispielsweise eine Rinne oder ein Skimmer verwendet werden. Das in der Rohwasserkammer gesammelte Wasser durchläuft dann die Umwälzstrecke und wird anschließend wieder in das Schwimmbecken zurück geleitet.

Die Filtereinrichtung kann auf mehrere bekannte Arten ausgeführt sein. Beispielsweise kann ein Einschichtfilter oder alternativ ein Mehrschichtfilter verwendet werden. Es können Membranfilter, Offenfilter, Langsamfilter oder auch andere geeignete Filterkonstruktionen verwendet werden.

Die Chlorung des in der Umwälzstrecke befindlichen Badewassers vor dem Verlassen der Umwälzstrecke kann ebenfalls auf bekannte Arten erfolgen, beispielsweise durch Zugabe von molekularem Chlor, von Chloroxid (ClO₂) oder von Chlorbleichlauge. Ebenso können geeignete Desinfektionsmittel wie beispielsweise Kalziumhypochlorit, Bromlösungen und dergl. dem Wasser zugesetzt werden.

Bei Wasserstoffperoxid handelt es sich um einen in entsprechenden Behältern wie Kanistern, Tanks etc. lagerfähigen Stoff, der in flüssiger Form vorliegt und daher einfach gehandhabt und dem Badewasser beigemischt werden kann. Es ist nicht notwendig, Wasserstoffperoxid vor Ort zu erzeugen, was sich vorteilhaft auf die Wirtschaftlichkeit auswirkt. Ein weiterer Vorteil von Wasserstoffperoxid im Vergleich zu chemischen Zusätzen ist darin zu sehen, dass kein zusätzlicher Chemikalieneintrag in das Badewasser erfolgt. Wasserstoffperoxid hat eine gute desinfizierende Wirkung und sorgt für einen zuverlässigen Abbau organischer Stoffe. Dabei wird nicht nur die Wasserqualität verbessert, sondern auch eine Reinigung und Desinfektion des gesamten Gefäßsystems, beispielsweise von Behältern, Rohrleitungen, Filtereinbauten etc. erreicht. Ebenso werden unerwünschte Biofilme mittels Wasserstoffperoxid zuverlässig abgebaut. Damit wird eine Verschleppung von Schädlingen, insbesondere von Legionellen und Pseudomonaden, in das Badewasser wirksam verhindert. Beim Abbau von Wasserstoffperoxid entstehen in vorteilhafter Weise auch freie Radikale, was den Abbau von gebundenem Chlor, sogenannten Chloraminen, sowie von Chlorreaktionsprodukten wie Trihalogenmethan, Haloformen und Erregern wie Bakterien, Viren, Pilzen etc. gewährleistet.

Es hat sich als vorteilhaft herausgestellt, wenn bei der Beimischung von Wasserstoffperoxid zum umgewälzten Badewasser eine Menge von 0,5 bis 4 ml einer Wasserstoffperoxid-Lösung pro m³ an umgewälztem Badewasser und Stunde zugegeben wird.

Die Konzentration von Wasserstoffperoxid in einer zuzugebenden Wasserstoffperoxid-Lösung beträgt bevorzugt zwischen 20 und 50 %, besonders bevorzugt 35 %.

Die Menge an beigemischtem Wasserstoffperoxid kann beispielsweise durch Variation der Menge an zugegebener Wasserstoffperoxid-Lösung eingestellt werden. Alternativ oder zusätzlich kann die Menge an beigemischtem Wasserstoffperoxid durch Variation der Konzentration einer zugegebenen Wasserstoffperoxid-Lösung eingestellt werden.

Bevorzugt erfolgt bei der Beimischung von Wasserstoffperoxid zum umgewälzten Badewasser die Dosierung der zugegebenen Menge an Wasserstoffperoxid mengenproportional zum umgewälzten Badewasser. Damit wird erreicht, dass immer die gleiche Menge an Wasserstoffperoxid pro Einheit von umgewälztem Badewasser zugegeben wird, was eine entsprechend mit der Durchflussmenge mitskalierte Desinfektionswirkung sicherstellt. Damit kann beispielsweise der gewünschte Grad von Desinfektionswirkung mittels der durchgeleiteten Menge an Badewasser durch die Umwälzstrecke eingestellt werden.

Gemäß einer Weiterbildung erfolgt bei der Beimischung von Wasserstoffperoxid zum umgewälzten Badewasser die Dosierung der zugegebenen Menge an Wasserstoffperoxid in Abhängigkeit von der Konzentration an Wasserstoffperoxid im Badewasser. Eine solche Dosierung kann zusätzlich oder alternativ zu einer mengenproportionalen Dosierung vorgesehen und implementiert sein. Beispielsweise kann eine Anlage so ausgebildet sein, dass zwischen beiden Möglichkeiten der Dosierung hin und her geschaltet werden kann. Eine Dosierung der zugegebenen Menge an Wasserstoffperoxid in Abhängigkeit von der Konzentration an Wasserstoffperoxid im Badewasser ermöglicht es, die Menge an Wasserstoffperoxid, welches dem Badewasser beigemischt wird, so zu steuern oder zu regeln, dass in dem Badewasser an der Stelle, an welcher die Konzentration zum Wasserstoffperoxid gemessen wird, eine weitgehend konstante Konzentration von Wasserstoffperoxid erreicht wird. Dies ermöglicht es, eine definierte Desinfektionswirkung und Reinigungswirkung des Wasserstoffperoxids sicher zu stellen und den Verbrauch von H₂O₂ zu optimieren.

Die Messung der Konzentration von Wasserstoffperoxid kann beispielsweise mittels einer Messung einer Redoxspannung oder durch eine spezifische Messung erfolgen.

Gemäß einer anderen Weiterbildung erfolgt bei der Beimischung von Wasserstoffperoxid zum umgewälzten Badewasser die Dosierung der zugegebenen Menge an Wasserstoffperoxid in Abhängigkeit von der Trübung des Badewassers. Die Trübung des Badewassers kann mittels geeigneter Messeinrichtungen auf bekannte Art gemessen werden. Beispielsweise kann in einer solchen Messeinrichtung die Schwächung eines durch das Wasser durchgehenden Lichtstrahls oder die Seitwärtsstreuung eines durch das Wasser durchgehenden Lichtstrahls gemessen werden. Damit kann ein zuverlässiges Maß für die Trübung des Wassers erhalten werden.

Die Dosierung der zugegebenen Menge an Wasserstoffperoxid in Abhängigkeit von der Trübung des Badewassers ermöglicht es, den Verbrauch von Wasserstoffperoxid am tatsächlichen Bedarf auszurichten. Beispielsweise kann auf diese Weise sichergestellt werden, dass das Badewasser eine gewisse maximale Trübung nicht überschreitet. Sofern das Badewasser die maximale Trübung unterschreitet, beispielsweise aufgrund schwacher Frequentierung des Beckens, kann der Verbrauch von Wasserstoffperoxid verringert werden, was sich positiv auf die Betriebskosten auswirkt.

Auch die Dosierung in Abhängigkeit von der Trübung des Badewassers kann zusätzlich oder alternativ zu einer mengenproportionalen Dosierung vorgesehen sein. Sie kann auch zusätzlich zu einer Dosierung in Abhängigkeit von der Konzentration von Wasserstoffperoxid vorgesehen sein. Damit können beispielsweise einem Benutzer unterschiedliche Betriebsmodi der Anlage zur Verfügung gestellt werden, welche dieser je nach Frequentierung des Beckens oder anderer externer Einflüsse auswählen kann. Es kann auch vorgesehen sein, dass die Zufuhr von Wasserstoffperoxid zeitweise ganz abgeschaltet und erst bei Bedarf wieder aktiviert wird.

Bei der Dosierung in Abhängigkeit von der Konzentration an Wasserstoffperoxid und der Dosierung in Abhängigkeit von der Trübung des Badewassers wird zur Ermittlung der zuzugebenden Menge an Wasserstoffperoxid oder einer hierzu verwendeten Wasserstoffperoxid-Lösung bevorzugt eine Fuzzi-Logik verwendet. Es hat sich gezeigt, dass eine solche Fuzzi-Logik mit den in Schwimmbädern typischerweise auftretenden Betriebssituationen in idealer Weise klarkommt. Beispielsweise ermöglicht eine Fuzzi-Logik ein besonders effektives Ansprechen bei einer schnellen Änderung der Anzahl von Personen, welche sich im Becken aufhalten. Derartiges kann gerade bei öffentlichen Bädern häufig passieren, beispielsweise wenn eine Gruppe von Personen, welche an einem Schwimmkurs oder an einer Wassergymnastik teilnehmen wollen, das Becken nahezu gleichzeitig betreten.

Gemäß einer bevorzugten Ausführung ist die Beimischung von Wasserstoffperoxid zumindest teilweise einer dem Becken zugeordneten Rohwasserkammer zugeordnet. Die Beimischung von Wasserstoffperoxid kann auch ausschließlich einer solchen Rohwasserkammer zugeordnet sein. Damit kann in vorteilhafter Weise eine Reinigung der Rohwasserkammer erreicht werden, beispielsweise kann diese dadurch von Biofilmen und anderen unerwünschten Ablagerungen freigehalten werden.

Gemäß einer weiteren bevorzugten Ausführung erfolgt die Beimischung von Wasserstoffperoxid zumindest teilweise stromabwärts einer Rohwasserkammer und stromaufwärts der Filtereinrichtung. Die Beimischung von Wasserstoffperoxid kann auch vollständig stromabwärts einer Rohwasserkammer und stromaufwärts der Filtereinrichtung erfolgen. Durch eine Beimischung von Wasserstoffperoxid stromaufwärts der Filtereinrichtung wird erreicht, dass die Filtereinrichtung durch Wasserstoffperoxid effektiv desinfiziert wird und gereinigt wird. Damit wird die Wirkung der Filtereinrichtung unterstützt.

Gemäß einer weiteren bevorzugten Ausführung erfolgt die Beimischung von Wasserstoffperoxid zumindest teilweise stromabwärts der Filtereinrichtung und stromaufwärts der Chlorung. Die Beimischung von Wasserstoffperoxid kann auch vollständig stromabwärts der Filtereinrichtung und stromaufwärts der Chlorung erfolgen. Durch eine Beimischung von Wasserstoffperoxid vor der Chlorung und stromabwärts anderer Einrichtungen, wie der Filtereinrichtung, wird eine besonders gute Kombinationswirkung von Chlor und Wasserstoffperoxid erreicht. Durch die Wirkung des Chlors kann Wasserstoffperoxid deaktiviert werden, wobei es zerfällt und seine gewünschte oxidative Wirkung entfaltet.

Es sei verstanden, dass die drei explizit angesprochenen Möglichkeiten, an welchen Stellen die Beimischung von Wasserstoffperoxid erfolgen kann, auch miteinander kombiniert werden können. Außerdem können alternativ oder zusätzlich dazu auch andere Möglichkeiten für entsprechende Positionen zur Beimischung von Wasserstoffperoxid in die Umwälzstrecke vorgesehen sein.

Gemäß einer Weiterbildung wird dem umgewälzten Badewasser Pulveraktivkohle beigemischt, die so dosiert wird, dass sie höchstens einen Teil des dem umgewälzten Badewasser vorher oder nachher beigemischten Wasserstoffperoxids adsorbieren kann. Damit kann eine zusätzliche Reinigungswirkung durch katalytische Prozesse in Verbindung mit Pulveraktivkohle erreicht werden, wobei gleichzeitig die entsprechende Reinigungs- und Desinfektionswirkung von Wasserstoffperoxid erhalten bleibt. Eine etwaige teilweise Adsorption von Wasserstoffperoxid an der Pulveraktivkohle kann bei der Dosierung der Menge von beizumischendem Wasserstoffperoxid berücksichtigt werden.

Gemäß einer vorteilhaften Weiterbildung erfolgt stromabwärts einer Rohwasserkammer und stromaufwärts der Filtereinrichtung eine Zufuhr zumindest eines Flockungsmittels. Mittels eines solchen Flockungsmittels kann beispielsweise die Filterwirkung der Filtereinrichtung verbessert werden.

Durch das erfindungsgemäße Verfahren werden auch vorteilhaft Trihalogenmethan (THM), chemischer Sauerstoffbedarf (CSB), gebundenes Chlor sowie adsorbierbare organisch gebundene Halogenide (AOX) verringert. Dies erfolgt durch die Wirkung von Wasserstoffperoxid, welches bei seinem Zerfall OH-Radikale bildet. Weiter wird keine UV- oder Ozonanlage benötigt. Auch auf den Einsatz einer Anlage zur Beimischung von Pulveraktivkohle, welche bereits angesprochen wurde, kann bei entsprechender Auslegung des Systems verzichtet werden. Damit können sowohl die Investitionskosten wie auch die laufenden Kosten erheblich verringert werden. Durch das Fehlen einer UV-Anlage wird auch der Verbrauch von Energie deutlich verringert. Die Wasserqualität wird dabei durch den Abbau der eben genannten Stoffe deutlich verbessert, wobei zusätzlicher Chemikalieneintrag vermieden wird, weil Wasserstoffperoxid letztlich zu reinem Sauerstoff und Wasser zerfällt. Gegenüber der Verwendung von Ozonanlagen hat Wasserstoffperoxid den Vorteil, dass es auch bei offenen Filtern anwendbar ist, da es nicht ausgast.

Die Erfindung betrifft des weiteren eine Vorrichtung zur Durchführung des Verfahrens mit einer einem Becken für Badewasser zugeordneten, mit einer Umwälzpumpe versehenen Umwälzstrecke, die eine Wasseraufbereitungseinrichtung und eine dieser nachgeordnete Chlorungseinrichtung enthält. Die Wasseraufbereitungseinrichtung weist erfindungsgemäß wenigstens eine Wasserstoffperoxid-Beimischeinrichtung zur Beimischung von Wasserstoffperoxid zum umgewälzten Badewasser auf. Sie ist derart ausgebildet, dass sie keine Deaktivierung von Wasserstoffperoxid verursacht, bevor es die Chlorungseinrichtung erreicht.

Durch die erfindungsgemäße Vorrichtung können die Vorteile des erfindungsgemäßen Verfahrens realisiert werden. Die erfindungsgemäße Vorrichtung kann auf eine UV-Anlage verzichten, was zu den bereits erwähnten Vorteilen führt.

Darunter, dass keine Deaktivierung des Wasserstoffperoxids verursacht wird, bevor es die Chlorungseinrichtung erreicht, sei verstanden, dass in der Vorrichtung keine speziell zur Deaktivierung des Wasserstoffperoxids vorgesehenen Einrichtungen vorhanden sind. Insbesondere enthält die Vorrichtung keine UV-Lampe zur Bestrahlung des Wassers mit UV-Licht. Es sei verstanden, dass Wasserstoffperoxid auch von sich aus, d.h. ohne dass dies durch spezielle Mittel provoziert wird, zerfällt. Dies kann beispielsweise auch in einer zur Vorrichtung gehörenden Filtereinrichtung oder an dazu gehörenden Rohren erfolgen.

Bevorzugt ist in der Umwälzstrecke eine Filtereinrichtung angeordnet, wobei die Wasserstoffperoxid-Beimischeinrichtung der Filtereinrichtung vorgeordnet ist, also stromaufwärts der Filtereinrichtung angeordnet ist. Mit einer solchen Ausführung werden die bereits beschriebenen Vorteile der Beimischung von Wasserstoffperoxid vor der Filtereinrichtung erreicht.

Gemäß einer bevorzugten Weiterbildung weist die Vorrichtung ferner Mittel zur Messung der Trübung des Badewassers sowie Mittel zum Dosieren der beizumischenden Menge an Wasserstoffperoxid in Abhängigkeit von der Trübung auf. Damit können die bereits erwähnten Vorteile einer Dosierung der Menge an Wasserstoffperoxid in Abhängigkeit von der Trübung erreicht werden. Bei den Mitteln zur Messung der Trübung des Badewassers kann es sich beispielsweise um eine Anordnung handeln, welche die Trübung des Badewassers anhand der Absorption oder Streuung eines durch das Badewasser geleiteten Lichtstrahls ermittelt. Bei den Mitteln zum Dosieren der beizumischenden Menge an Wasserstoffperoxid kann es sich um eine elektronische Steuer- oder Regelungseinrichtung handeln. Bevorzugt handelt es sich dabei um eine Fuzzi-Logik, womit die bereits erwähnten Vorteile erreicht werden.

Weitere Vorteile und Weiterbildungen der Erfindung werden dem Fachmann bei Betrachtung der nachfolgend mit Bezug auf die beigefügte Zeichnung beschriebenen Ausführungsbeispiele ersichtlich werden.

In der Zeichnung zeigen:
- Figur 1:: Eine schematische Darstellung einer erfindungsgemäßen Vorrichtung zur Durchführung des erfindungsgemäßen Verfahrens zur Aufbereitung von Badewasser, und
- Figuren 2a bis 2c: Varianten zu der der Ausführung gemäß Fig. 1 zugrunde liegenden Badewasser-Aufbereitungseinrichtung.

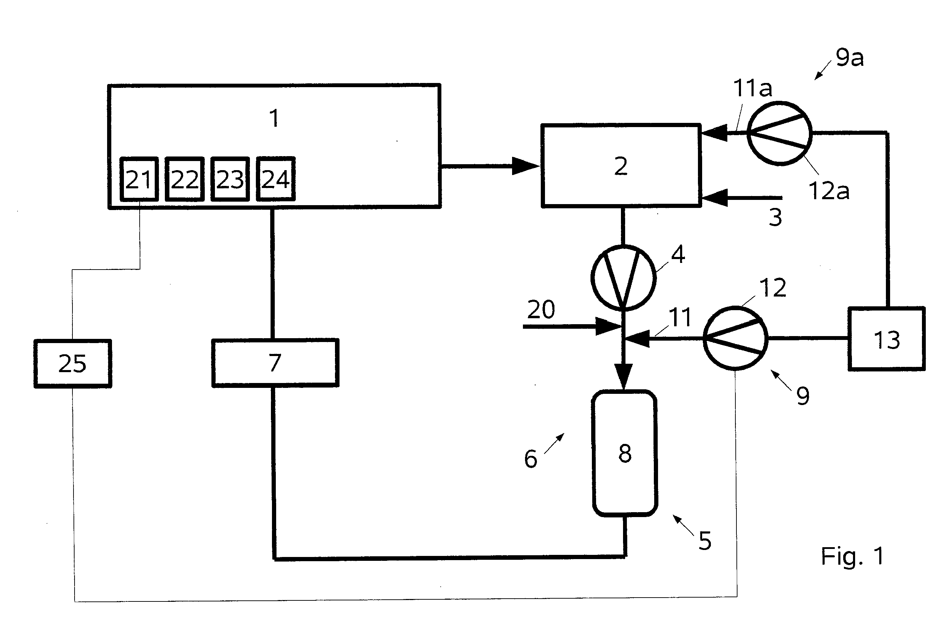

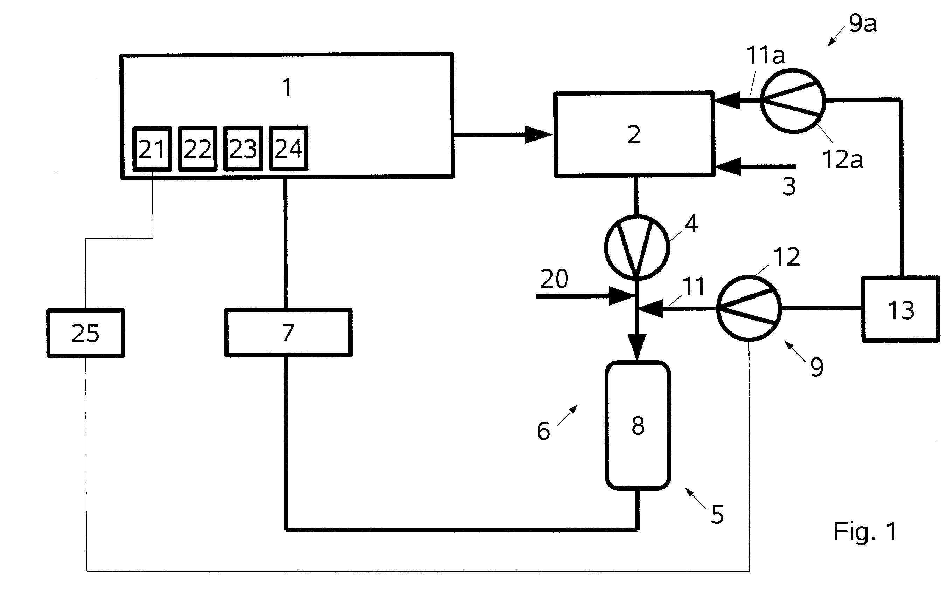

In Figur 1 ist ein Schwimmbecken 1 dargestellt, dem eine Rohwasserkammer 2 nachgeordnet ist, welche mit einem Überlauf des Schwimmbeckens 1 verbunden ist. In die Rohwasserkammer 2 läuft somit das Wasser aus dem Schwimmbecken 1, welches einer Reinigung zugeführt werden soll.

In die Rohwasserkammer 2 mündet ebenfalls eine Versorgungsleitung 3, über die Frischwasser in Form von Füll- und Nachspeisewasser zuführbar ist. Damit kann dem Schwimmbad Füllwasser zugeführt werden, um einen teilweisen Austausch des Wassers in dem Schwimmbecken 1 zu ermöglichen. Alternativ könnte die Versorgungsleitung 3 beispielsweise auch in den Ablauf des Schwimmbeckens 1 münden.

Das im Schwimmbecken 1 vorhandene Badewasser wird über eine mit einer Umwälzpumpe 4 versehene Umwälzstrecke 5 umgewälzt, die von einem Ausgang der Rohwasserkammer 2 abgeht und zu einem zugeordneten Eingang des Schwimmbeckens 1 führt. Die Umwälzstrecke 5 führt über eine Wasseraufbereitungseinrichtung 6 und eine dieser nachgeordnete Chlorungseinrichtung 7, wobei in der Chlorungseinrichtung 7 eine Beimischung von Chlor zum Badewasser auf geeignete Art erfolgt. Dies kann beispielsweise durch Zugabe von molekularem Chlor, von Chlorbleichlauge oder auf andere Art geschehen.

Die Wasseraufbereitungseinrichtung 6 weist einen Filter 8 auf, welcher vom umgewälzten Badewasser durchströmt wird. Der Aufbau des Filters 8 ist frei wählbar. Dabei kann es sich um einen Einschicht-, Mehrschicht- oder Membranfilter etc. handeln. Der Filter 8 kann als geschlossener oder offener Filter ausgebildet sein.

Die Wasseraufbereitungseinrichtung 6 enthält weiterhin eine Wasserstoffperoxid-Beimischeinrichtung 9. Die Wasserstoffperoxid-Beimischeinrichtung 9 enthält wenigstens eine in die Umwälzstrecke 5 mündende Beimischleitung 11, die von einer zugeordneten Pumpe 12 gespeist wird, der saugseitig ein Wasserstoffperoxid-Tank 13 zugeordnet ist. Dieser enthält eine geeignete Wasserstoffperoxid-Lösung mit einer Konzentration von beispielsweise 35 % Wasserstoffperoxid.

Das Wasserstoffperoxid bekämpft Chlorreaktionsprodukte wie gebundenes Chlor, THM, AOX, Viren, Mikroorganismen etc. und bewirkt somit eine gute Desinfektion des Wassers sowie eine Verringerung von Biofilmen auf den Oberflächen der Leitungs- und Gefäßsysteme, wobei diese Wirkungen insbesondere auf die Bildung von OH-Radikalen, sogenannten freien Radikalen zurückzuführen sind, die beim Abbau von Wasserstoffperoxid entstehen. Wie sich gezeigt hat wird Wasserstoffperoxid spätestens nach der Zugabe von Chlor in der Chlorungseinrichtung 7 ausreichend wirksam deaktiviert, um die gewünschte Wirkung zu erreichen.

Bei dem der Fig. 1 zugrunde liegenden Ausführungsbeispiel der Wasseraufbereitungseinrichtung 6 ist die Wasserstoffperoxid-Beimischeinrichtung 9 stromaufwärts des Filters 8 angeordnet. Hierdurch wird erreicht, dass das dem Badewasser beigemischte Wasserstoffperoxid im Filter 8 voll wirksam wird und diesen desinfiziert, was eine zuverlässige Bekämpfung von Erregern, insbesondere der gefürchteten Legionellen und Pseudomonaden bewirkt. Der Rauminhalt der Leitung von der Wasserstoffperoxid-Beimischeinrichtung 9 bis zum Filter 8 sowie der Stauraum des Filters 8 können hierbei als Reaktor wirken, wenngleich ein Reaktor auch verzichtbar ist.

Sofern der Filter 8, wie oben als Möglichkeit erwähnt, als Mehrschichtfilter mit einer oberen Aktivkohleschicht ausgebildet ist, die Wasserstoffperoxid abbauen kann, ist diese Schicht zweckmäßig so dünn, dass auch am unteren Ausgang des Filters 8 noch Wasserstoffperoxid ankommt. Bei Filtern mit einer Durchsatzgeschwindigkeit von 20 - 30 m/h hat sich dabei eine Dicke der Aktivkohleschicht von 10 bis 20 cm als günstig erwiesen.

Die Anwesenheit von Aktivkohle im Strömungsweg des mit Wasserstoffperoxid beaufschlagten Wassers kann überhaupt vorteilhaft sein. In diesem Zusammenhang ist nämlich davon auszugehen, dass sich die im Wasser enthaltenen Schadstoffe bevorzugt an der Aktivkohle anlagern, an der sich auch Wasserstoffperoxid bevorzugt abreagiert. Die Aktivkohle wirkt daher in vorteilhafter Weise praktisch katalytisch. Das Wasserstoffperoxid wird an der Oberfläche der Aktivkohle aktiviert. Dabei kann es sich um zugegebene Pulveraktivkohle oder Kornaktivkohle, die im Filter vorhanden ist, handeln. Die Beimischung von Pulveraktivkohle kann vor oder nach der Beimischung von Wasserstoffperoxid erfolgen, das vorteilhaft an der Oberfläche der Pulveraktivkohle aktiviert wird. In der Ausführung von Fig. 1 kann die Beimischung von Pulveraktivkohle beispielsweise mittels einer Beimischeinrichtung 20 erfolgen. Diese ist stromaufwärts des Filters 8 angeordnet. Da die Pulveraktivkohle Wasserstoffperoxid abbaut erfolgen die Dosierung der Pulveraktivkohle und/oder des Wasserstoffperoxids zweckmäßig so, dass zumindest ein Rest von Wasserstoffperoxid in den Filter 8 gelangt und diesen desinfizieren kann.

Des weiteren weist die in Fig. 1 dargestellte Ausführung eine weitere Wasserstoffperoxid-Beimischeinrichtung 9a auf, welche ebenfalls eine Pumpe 12a und eine Zuführleitung 11a hat, wobei die Pumpe 12a saugseitig mit dem Wasserstoffperoxid-Tank 13 verbunden ist. Die weitere Wasserstoffperoxid-Zuführeinrichtung 9a kann im Aufbau der Wasserstoffperoxid-Zuführeinrichtung 9 entsprechen. Die Zufuhr von Wasserstoffperoxid zur Rohwasserkammer 2 hat den Vorteil, dass bereits in dieser und nicht nur in den stromabwärts hiervon sich befindenden Leitungen und Gefäßen eine zuverlässige Verringerung von Biofilmen und Schadstoffen wie Bakterien, Viren, Pilzen etc. erreicht wird.

Alternativ wäre es jedoch beispielsweise auch denkbar, das Wasserstoffperoxid in einen vom Hauptstrom abzweigenden und in diesen wieder einmündenden Teilstrom beizumischen. Dies ermöglicht eine hohe WasserstoffperoxidKonzentration im Teilstrom, ohne bezogen auf den Gesamtstrom vorgeschriebene Grenzen zu überschreiten. Hierzu könnte eine der Wasserstoffperoxid-Beimischeinrichtung 9 zugeordnete, von der Umwälzstrecke 5 abzweigende und in diese wieder einmündende Schleife vorgesehen sein, in die mittels der Wasserstoffperoxid-Beimischeinrichtung 9 Wasserstoffperoxid eingespeist werden kann. Zweckmäßig kann der Schleife eine eigene Umwälzpumpe zugeordnet sein.

Die Beimischeinrichtung 20 ist so ausgelegt, dass neben der bereits erwähnten Zugabe von Pulveraktivkohle auch die Zugabe von Flockungsmitteln möglich ist. Damit kann je nach Bedarf die Reinigungswirkung angepasst werden.

In dem Schwimmbecken 1 sind vier Sensoren 21, 22, 23, 24 angeordnet. Bei dem Sensor 21 handelt es sich um einen Trübungsmesser, welcher mittels eines durch das Wasser laufenden Lichtstrahls die Trübung des Wassers bestimmt. Bei dem Sensor 22 handelt es sich um ein Messinstrument, welches das Redoxpotential des Badewassers bestimmt. Bei dem Sensor 23 handelt es sich um ein Messgerät, welches den Gehalt an freiem Chlor im Schwimmbecken bestimmt. Bei dem Sensor 24 handelt es sich um ein Messgerät, welches den pH-Wert des im Schwimmbecken 1 befindlichen Wassers bestimmt. Damit können wichtige Parameter des im Schwimmbecken 1 befindlichen Badewassers ermittelt werden. Auch weitere Sensoren für weitere Parameter, z.B. Gesamtchlor, gebundenes Chlor etc. könnten vorgesehen sein.

Die in Fig. 1 gezeigte Ausführung weist ferner eine Steuereinrichtung 25 auf, welche vorliegend mit einer Fuzzi-Logik ausgestattet ist. Die Steuereinrichtung 25 erhält ein Signal von dem Sensor 21, welcher die Trübung des im Schwimmbecken 1 befindlichen Badewassers ermittelt. In Abhängigkeit von dieser Trübung ermittelt die Steuereinrichtung 25 die nötige Menge an zuzusetzendem Wasserstoffperoxid. Entsprechend der ermittelten benötigten Menge an zuzusetzendem Wasserstoffperoxid steuert die Steuereinrichtung 25 die Pumpe 12, so dass die richtige Menge an Wasserstoffperoxid-Lösung aus dem Tank 13 der Umwälzstrecke 5 zugesetzt wird. Dabei kann die Pumpe bevorzugt so gesteuert werden, dass dem umgewälzten Badewasser eine Menge von 0,5 bis 4 ml einer Wasserstoffperoxid-Lösung pro m³ an umgewälztem Badewasser und Stunde zugegeben wird. Die Wasserstoffperoxid-Lösung hat dabei bevorzugt eine Konzentration zwischen 20 und 50 % Wasserstoffperoxid, besonders bevorzugt von 35 %.

In den nachstehend beschriebenen Figuren 2a bis 2c ist jeweils lediglich ein Ausschnitt aus der Wasseraufbereitungseinrichtung 6 dargestellt, wobei für entsprechende Teile die selben Bezugszeichen verwendet werden wie in Fig. 1.

Bei der Anordnung von Fig. 2a ist die Wasserstoffperoxid-Beimischeinrichtung 9 stromabwärts der Rohwasserkammer 2 und stromaufwärts des Filters 8 angeordnet. Dies entspricht der Anordnung der Wasserstoffperoxid-Beimischeinrichtung 9, welche auch in Fig. 1 dargestellt ist.

Bei der Anordnung gemäß Fig. 2b ist die Wasserstoffperoxid-Beimischeinrichtung 9 stromabwärts des Filters 8 angeordnet. Dies kann beispielsweise vorteilhaft sein, wenn der Filter 8 durch Wasserstoffperoxid beschädigt werden könnte und eine ausreichende Wasserbehandlung auch in dem Teil der Umwälzstrecke 5 sichergestellt ist, welcher stromabwärts des Filters 8 gelegen ist.

Bei der Anordnung gemäß Fig. 2c ist die Wasserstoffperoxid-Beimischeinrichtung 9 so angeordnet, dass sie direkt in die Rohwasserkammer 2 mündet. Damit wird eine Reinigung des Wassers bereits in der Rohwasserkammer 2 sichergestellt. Da Wasserstoffperoxid nicht zwingend unmittelbar zerfällt, wird das Wasser auch bei Eintritt in die Umwälzstrecke 5 noch eine ausreichende Konzentration von Wasserstoffperoxid aufweisen, um auch in diesem Kreislauf noch eine desinfizierende und reinigende Wirkung zu haben.

## Patentansprüche

1. Verfahren zur Aufbereitung von einem Becken (1) zugeordnetem Badewasser, das in einer Umwälzstrecke (5) umgewälzt wird, wobei das Badewasser in der Umwälzstrecke (5) eine Filtereinrichtung (8) durchläuft und stromabwärts der Filtereinrichtung (8) vor dem Verlassen der Umwälzstrecke (5) gechlort wird, **dadurch gekennzeichnet, dass** dem in der Umwälzstrecke (5) umgewälzten Badewasser Wasserstoffperoxid (H₂O₂) beigemischt wird bevor es gechlort wird, welches vor der Chlorung nicht vorrichtungsmäßig deaktiviert wird.

2. Verfahren nach Anspruch 1, **dadurch gekennzeichnet, dass** bei der Beimischung von Wasserstoffperoxid zum umgewälzten Badewasser eine Menge von 0,5 bis 4 ml einer Wasserstoffperoxid-Lösung pro m³ an umgewälztem Badewasser und Stunde zugegeben wird, und/oder dass bei der Beimischung von Wasserstoffperoxid zum umgewälzten Badewasser eine Wasserstoffperoxid-Lösung mit einer Konzentration von Wasserstoffperoxid zwischen 20 und 50 %, vorzugsweise von 35 %, zugegeben wird.

3. Verfahren nach einem der vorhergehenden Ansprüche, **dadurch gekennzeichnet, dass** bei der Beimischung von Wasserstoffperoxid zum umgewälzten Badewasser die Dosierung der zugegebenen Menge an Wasserstoffperoxid mengenproportional zum umgewälzten Badewasser erfolgt.

4. Verfahren nach einem der vorhergehenden Ansprüche, **dadurch gekennzeichnet, dass** bei der Beimischung von Wasserstoffperoxid zum umgewälzten Badewasser die Dosierung der zugegebenen Menge an Wasserstoffperoxid in Abhängigkeit von der Konzentration an Wasserstoffperoxid im Badewasser erfolgt, und/oder dass bei der Beimischung von Wasserstoffperoxid zum umgewälzten Badewasser die Dosierung der zugegebenen Menge an Wasserstoffperoxid in Abhängigkeit von der Trübung des Badewassers erfolgt.

5. Verfahren nach Anspruch 4, **dadurch gekennzeichnet, dass** zur Dosierung eine Fuzzi-Logik verwendet wird.

6. Verfahren nach einem der vorhergehenden Ansprüche, **dadurch gekennzeichnet, dass** die Beimischung von Wasserstoffperoxid zumindest teilweise einer dem Becken zugeordneten Rohwasserkammer (2) zugeordnet ist, und/oder dass die Beimischung von Wasserstoffperoxid zumindest teilweise stromabwärts einer Rohwasserkammer (2) und stromaufwärts der Filtereinrichtung (8) erfolgt, und/oder dass die Beimischung von Wasserstoffperoxid zumindest teilweise stromabwärts der Filtereinrichtung (8) und stromaufwärts der Chlorung erfolgt.

7. Verfahren nach einem der vorhergehenden Ansprüche, **dadurch gekennzeichnet, dass** dem umgewälzten Badewasser Pulveraktivkohle beigemischt wird, die so dosiert wird, dass sie höchstens einen Teil des dem umgewälzten Badewasser vorher oder nachher beigemischten Wasserstoffperoxids adsorbieren kann, und/oder dass stromabwärts einer Rohwasserkammer (2) und stromaufwärts der Filtereinrichtung (8) eine Zufuhr zumindest eines Flockungsmittels erfolgt.

8. Vorrichtung zur Durchführung des Verfahrens nach wenigstens einem der vorhergehenden Ansprüche mit einer einem Becken (1) für Badewasser zugeordneten, mit einer Umwälzpumpe (4) versehenen Umwälzstrecke (5), die eine Wasseraufbereitungseinrichtung (6) und eine dieser nachgeordnete Chlorungseinrichtung (7) enthält, **dadurch gekennzeichnet, dass** die Wasseraufbereitungseinrichtung wenigstens eine Wasserstoffperoxid-Beimischeinrichtung (9, 9a) zur Beimischung von Wasserstoffperoxid zum umgewälzten Badewasser aufweist und derart ausgebildet ist, dass sie keine Deaktivierung des Wasserstoffperoxids verursacht, bevor es die Chlorungseinrichtung (7) erreicht.

9. Vorrichtung nach Anspruch 8, **dadurch gekennzeichnet, dass** in der Umwälzstrecke (5) eine Filtereinrichtung angeordnet ist und dass die Wasserstoffperoxid-Beimischeinrichtung (9, 9a) stromaufwärts der Filtereinrichtung angeordnet ist.

10. Vorrichtung nach Anspruch 8 oder 9, **dadurch gekennzeichnet, dass** sie ferner Mittel (21) zur Messung der Trübung des Badewassers sowie Mittel (25) zum Dosieren der beizumischenden Menge an Wasserstoffperoxid in Abhängigkeit von der Trübung aufweist.
